# EUROPEAN PATENT APPLICATION

(11) **EP 4 597 853 A1**
(43) Date of publication of application: **06.08.2025**
(21) Application number: 24155539.0
(22) Date of filing: 02.02.2024
(51) Int. Cl.: H04B 7/024, H04L 5/00, H04L 25/02

(54) **METHODS AND APPARATUSES RELATING TO USE OF QUASI-COLOCATION (QCL) IN MTRP-CAPABLE NETWORKS**

(71) Applicant: Nokia Technologies Oy, 02610 Espoo (FI)
(72) Inventor: HAKOLA, Sami-Jukka, Kempele (FI); KOSKELA, Timo, Oulu (FI); KARJALAINEN, Juha Pekka, Sotkamo (FI)
(74) Representative: Nokia EPO representatives

(57) **Abstract**

This specification describes a terminal device which comprises: means for receiving quasi-colocation, QCL, information which identifies a source reference signal and one or more channel characteristics associated with the source reference signal; means for receiving at least one parameter, the value of which is dependent on whether the source reference signal is transmitted by a single transmit-receive point, TRP, or by multiple TRPs in a serving cell of the terminal device; means for receiving the source reference signal; means for determining, based on the value of the at least one parameter, a subset of the one or more channel characteristics identified by the QCL information to use for receiving a target reference signal that is indicated as being quasi colocated with the source reference signal; means for estimating values for the subset of channel characteristics based on the received source reference signal; and means for receiving the target reference signal using the estimated values for the subset of channel characteristics.

## Description

### Field

This specification relates to quasi co-location (QCL) source determination in multiple transmission and reception point (mTRP) scenarios.

### Background

Put simply, mTRP enables network base stations (e.g. gNBs) to use more than one TRP to communicate with a given user equipment (UE) or terminal device. 5G New Radio (NR) has been enhanced with mTRP functionalities since the second Release, i.e. since Release 16. In addition, it is expected that 6G will have mTRP as the supported scenario from the first Release of 6G. This is because the mTRP scenario is required to provide capacity and coverage improvements compared to 5G NR.

### Summary

In a first aspect this specification describes a terminal device comprising: means for receiving quasi-colocation, QCL, information which identifies a source reference signal and one or more channel characteristics associated with the source reference signal; means for receiving at least one parameter, the value of which is dependent on whether the source reference signal is transmitted by a single transmit-receive point, TRP, or by multiple TRPs in a serving cell of the terminal device; means for receiving the source reference signal; means for determining, based on the value of the at least one parameter, a subset of the one or more channel characteristics identified by the QCL information to use for receiving a target reference signal that is indicated as being quasi colocated with the source reference signal; means for estimating values for the subset of channel characteristics based on the received source reference signal; and means for receiving the target reference signal using the estimated values for the subset of channel characteristics.

In some examples, the one or more channel characteristics identified by the QCL information include average delay and Doppler shift, and, in such examples, if i) the value of the at least one parameter corresponds to the source reference signal being transmitted by multiple TRPs in the serving cell and ii) the target reference signal is transmitted using a single TRP in the serving cell, then the subset of channel characteristics may include the average delay and does not include the Doppler shift. In contrast, if i) the value of the at least one parameter corresponds to the source reference signal being transmitted by a single TRP in the serving cell and ii) the target reference signal is transmitted using a single TRP in the serving cell, then the subset of channel characteristics may include the average delay and the Doppler shift.

In some examples, the one or more channel characteristics identified by the QCL information include average delay, Doppler shift and spatial receiver parameters, and, in such examples, if i) the value of the at least one parameter corresponds to the source reference signal being transmitted by multiple TRPs in the serving cell and ii) the target reference signal is transmitted using a single TRP in the serving cell, then the subset of channel characteristics may include the average delay but not the doppler shift and the spatial receive parameters. In contrast, if i) the value of the at least one parameter corresponds to the source reference signal being transmitted by a single TRP in the serving cell and ii) the target reference signal is transmitted using a single TRP in the serving cell, then the subset of channel characteristics may include the average delay, the Doppler shift and the spatial receiver parameters.

At least one of the QCL information, configuration information for the source reference signal, or configuration information for the target reference signal may comprise the at least one parameter.

In some examples, the at least one parameter comprises a parameter, and the configuration information for the target reference signal comprises the parameter, and the value of the parameter indicates to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell. In such examples, the at least one parameter may comprise a second parameter, a value of the second parameter indicating whether the source reference signal is transmitted by a single TRP or by multiple TRPs in the serving cell. At least one of the QCL information, the configuration information for the source reference signal or the configuration information for the target reference signal may comprise the second parameter.

In other examples, the at least one parameter may comprise a parameter, the value of the parameter indicating the subset of the one or more channel characteristics identified in the QCL information that can be used for receiving the target reference signal. The configuration information for the source reference signal or the configuration information for the target reference signal comprises the parameter. For instance, the QCL information may indicate a QCL type that corresponds to a plurality of channel characteristics associated with the source reference signal, the value of the parameter may indicate a QCL subtype that corresponds to a subset of the plurality of channel characteristics to which the QCL type corresponds, and the subset of channel characteristics determined based on the value of the parameter is the subset of the plurality of channel characteristics to which the QCL type corresponds. Alternatively, the QCL information may indicate a QCL type that corresponds to a plurality of channel characteristics associated with the source reference signal, the value of the parameter represents a bitmap or a mask, the terminal device may comprise means for applying the bitmap or the mask to the plurality of channel characteristics to determine a subset of the plurality of channel characteristics to which the QCL type corresponds, and the subset of channel characteristics determined based on the value of the parameter is the subset of the plurality of channel characteristics to which the QCL type corresponds.

In yet other examples, the at least one parameter comprises a parameter, and the value of the parameter indicates to the terminal device whether the source reference signal is transmitted by a single TRP or by multiple TRPs in the serving cell.

In the examples described herein, the source reference signal may be a reference signal that is broadcast for initial access, and the target reference signal may be a reference signal for tracking a channel in time and frequency domain while the terminal is in active communication within the serving cell. For instance, the source reference signal may be a synchronisation signal block, SSB, and the target reference signal may be a channel state information reference signal, CSI-RS, such as a tracking reference signal.

The QCL information may comprise a transmission configuration indicator, TCI, state, and the target reference signal may be indicated as being quasi colocated with the source reference signal by identifying the TCI state.

In a second aspect, this specification describes a network node comprising: means for operating a cell serving a terminal device; means for transmitting to the terminal device quasi-colocation, QCL, information which identifies a source reference signal and one or more channel characteristics associated with the source reference signal; means for transmitting the source reference signal; means for transmitting, to the terminal device, at least one parameter, the value of which is set in dependence on whether the source reference signal is transmitted by a single transmit-receive point, TRP, or by multiple TRPs in the serving cell; and means for transmitting a target reference signal that is indicated as being quasi colocated with the source reference signal.

The value of the at least one parameter may be for use by the terminal device in determining a subset of the one or more channel characteristics identified in the QCL information that can be used by the terminal device for receiving the target reference signal.

At least one of the QCL information, configuration information for the source reference signal, or configuration information for the target reference signal may comprise the at least one parameter.

In some examples, the at least one parameter comprises a parameter, and the value of the parameter may indicate to the terminal device whether the source reference signal is transmitted by a single TRP or by multiple TRPs in the serving cell.

In other examples, the at least one parameter comprises a parameter, the value of the parameter indicating to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell. In such examples, the configuration information for the target reference signal may comprise the parameter.

In other examples, the at least one parameter comprises a parameter, and the QCL information indicates a QCL type that corresponds to a plurality of channel characteristics associated with the source reference signal. The configuration information for the source reference signal or the configuration information for the target reference signal comprises the parameter, and the value of the parameter indicates a QCL subtype that corresponds to a subset of the plurality of channel characteristics to which the QCL type corresponds.

In a third aspect, this specification describes a method comprising: receiving quasi-colocation, QCL, information which identifies a source reference signal and one or more channel characteristics associated with the source reference signal; receiving at least one parameter, the value of which is dependent on whether the source reference signal is transmitted by a single transmit-receive point, TRP, or by multiple TRPs in a serving cell of the terminal device; receiving the source reference signal; means for determining, based on the value of the at least one parameter, a subset of the one or more channel characteristics identified by the QCL information to use for receiving a target reference signal that is indicated as being quasi colocated with the source reference signal; estimating values for the subset of channel characteristics based on the received source reference signal; and receiving the target reference signal using the estimated values for the subset of channel characteristics.

In some examples, the one or more channel characteristics identified by the QCL information include average delay and Doppler shift, and, in such examples, if i) the value of the at least one parameter corresponds to the source reference signal being transmitted by multiple TRPs in the serving cell and ii) the target reference signal is transmitted using a single TRP in the serving cell, then the subset of channel characteristics may include the average delay and does not include the Doppler shift. In contrast, if i) the value of the at least one parameter corresponds to the source reference signal being transmitted by a single TRP in the serving cell and ii) the target reference signal is transmitted using a single TRP in the serving cell, then the subset of channel characteristics may include the average delay and the Doppler shift.

In some examples, the one or more channel characteristics identified by the QCL information include average delay, Doppler shift and spatial receiver parameters, and, in such examples, if i) the value of the at least one parameter corresponds to the source reference signal being transmitted by multiple TRPs in the serving cell and ii) the target reference signal is transmitted using a single TRP in the serving cell, then the subset of channel characteristics may include the average delay but not the doppler shift and the spatial receive parameters. In contrast, if i) the value of the at least one parameter corresponds to the source reference signal being transmitted by a single TRP in the serving cell and ii) the target reference signal is transmitted using a single TRP in the serving cell, then the subset of channel characteristics may include the average delay, the Doppler shift and the spatial receiver parameters.

At least one of the QCL information, configuration information for the source reference signal, or configuration information for the target reference signal may comprise the at least one parameter.

In some examples, the at least one parameter comprises a parameter, and the configuration information for the target reference signal comprises the parameter, and the value of the parameter indicates to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell. In such examples, the at least one parameter may comprise a second parameter, a value of the second parameter indicating whether the source reference signal is transmitted by a single TRP or by multiple TRPs in the serving cell. At least one of the QCL information, the configuration information for the source reference signal or the configuration information for the target reference signal may comprise the second parameter.

In other examples, the at least one parameter may comprise a parameter, the value of the parameter indicating the subset of the one or more channel characteristics identified in the QCL information that can be used for receiving the target reference signal. The configuration information for the source reference signal or the configuration information for the target reference signal comprises the parameter. For instance, the QCL information may indicate a QCL type that corresponds to a plurality of channel characteristics associated with the source reference signal, the value of the parameter may indicate a QCL subtype that corresponds to a subset of the plurality of channel characteristics to which the QCL type corresponds, and the subset of channel characteristics determined based on the value of the parameter is the subset of the plurality of channel characteristics to which the QCL type corresponds. Alternatively, the QCL information may indicate a QCL type that corresponds to a plurality of channel characteristics associated with the source reference signal, the value of the parameter represents a bitmap or a mask, the method may comprise applying the bitmap or the mask to the plurality of channel characteristics to determine a subset of the plurality of channel characteristics to which the QCL type corresponds, and the subset of channel characteristics determined based on the value of the parameter is the subset of the plurality of channel characteristics to which the QCL type corresponds.

In yet other examples, the at least one parameter comprises a parameter, and the value of the parameter indicates to the terminal device whether the source reference signal is transmitted by a single TRP or by multiple TRPs in the serving cell.

In some examples described herein, the source reference signal may be a reference signal that is broadcast for initial access, and the target reference signal may be a reference signal for tracking a channel in time and frequency domain while the terminal is in active communication within the serving cell. For instance, the source reference signal may be a synchronisation signal block, SSB, and the target reference signal may be a channel state information reference signal, CSI-RS, such as a tracking reference signal.

The QCL information may comprise a transmission configuration indicator, TCI, state, and the target reference signal may be indicated as being quasi colocated with the source reference signal by identifying the TCI state.

In a fourth aspect, this specification describes a method, which may be performed by a network node, the method comprising: operating a cell serving a terminal device; transmitting to the terminal device quasi-colocation, QCL, information which identifies a source reference signal and one or more channel characteristics associated with the source reference signal; transmitting the source reference signal; transmitting, to the terminal device, at least one parameter, the value of which is set in dependence on whether the source reference signal is transmitted by a single transmit-receive point, TRP, or by multiple TRPs in the serving cell; and transmitting a target reference signal that is indicated as being quasi colocated with the source reference signal.

The value of the at least one parameter may be for use by the terminal device in determining a subset of the one or more channel characteristics identified in the QCL information that can be used by the terminal device for receiving the target reference signal.

At least one of the QCL information, configuration information for the source reference signal, or configuration information for the target reference signal may comprise the at least one parameter.

In some examples, the at least one parameter comprises a parameter, and the value of the parameter may indicate to the terminal device whether the source reference signal is transmitted by a single TRP or by multiple TRPs in the serving cell.

In other examples, the at least one parameter comprises a parameter, the value of the parameter indicating to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell. In such examples, the configuration information for the target reference signal may comprise the parameter.

In other examples, the at least one parameter comprises a parameter, and the QCL information indicates a QCL type that corresponds to a plurality of channel characteristics associated with the source reference signal. The configuration information for the source reference signal or the configuration information for the target reference signal comprises the parameter, and the value of the parameter indicates a QCL subtype that corresponds to a subset of the plurality of channel characteristics to which the QCL type corresponds.

In a fifth aspect, this specification describes apparatus (e.g. a terminal device or a component of a terminal device) comprising at least one processor and at least one memory storing instructions that, when executed by the at least one processor, cause the apparatus to perform at least: receiving quasi-colocation, QCL, information which identifies a source reference signal and one or more channel characteristics associated with the source reference signal; receiving at least one parameter, the value of which is dependent on whether the source reference signal is transmitted by a single transmit-receive point, TRP, or by multiple TRPs in a serving cell of the terminal device; receiving the source reference signal; means for determining, based on the value of the at least one parameter, a subset of the one or more channel characteristics identified by the QCL information to use for receiving a target reference signal that is indicated as being quasi colocated with the source reference signal; estimating values for the subset of channel characteristics based on the received source reference signal; and receiving the target reference signal using the estimated values for the subset of channel characteristics.

In some examples, the one or more channel characteristics identified by the QCL information include average delay and Doppler shift, and, in such examples, if i) the value of the at least one parameter corresponds to the source reference signal being transmitted by multiple TRPs in the serving cell and ii) the target reference signal is transmitted using a single TRP in the serving cell, then the subset of channel characteristics may include the average delay and does not include the Doppler shift. In contrast, if i) the value of the at least one parameter corresponds to the source reference signal being transmitted by a single TRP in the serving cell and ii) the target reference signal is transmitted using a single TRP in the serving cell, then the subset of channel characteristics may include the average delay and the Doppler shift.

In some examples, the one or more channel characteristics identified by the QCL information include average delay, Doppler shift and spatial receiver parameters, and, in such examples, if i) the value of the at least one parameter corresponds to the source reference signal being transmitted by multiple TRPs in the serving cell and ii) the target reference signal is transmitted using a single TRP in the serving cell, then the subset of channel characteristics may include the average delay but not the doppler shift and the spatial receive parameters. In contrast, if i) the value of the at least one parameter corresponds to the source reference signal being transmitted by a single TRP in the serving cell and ii) the target reference signal is transmitted using a single TRP in the serving cell, then the subset of channel characteristics may include the average delay, the Doppler shift and the spatial receiver parameters.

At least one of the QCL information, configuration information for the source reference signal, or configuration information for the target reference signal may comprise the at least one parameter.

In some examples, the at least one parameter comprises a parameter, and the configuration information for the target reference signal comprises the parameter, and the value of the parameter indicates to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell. In such examples, the at least one parameter may comprise a second parameter, a value of the second parameter indicating whether the source reference signal is transmitted by a single TRP or by multiple TRPs in the serving cell. At least one of the QCL information, the configuration information for the source reference signal or the configuration information for the target reference signal may comprise the second parameter.

In other examples, the at least one parameter may comprise a parameter, the value of the parameter indicating the subset of the one or more channel characteristics identified in the QCL information that can be used for receiving the target reference signal. The configuration information for the source reference signal or the configuration information for the target reference signal comprises the parameter. For instance, the QCL information may indicate a QCL type that corresponds to a plurality of channel characteristics associated with the source reference signal, the value of the parameter may indicate a QCL subtype that corresponds to a subset of the plurality of channel characteristics to which the QCL type corresponds, and the subset of channel characteristics determined based on the value of the parameter is the subset of the plurality of channel characteristics to which the QCL type corresponds. Alternatively, the QCL information may indicate a QCL type that corresponds to a plurality of channel characteristics associated with the source reference signal, the value of the parameter represents a bitmap or a mask, the instructions may cause the apparatus to apply the bitmap or the mask to the plurality of channel characteristics to determine a subset of the plurality of channel characteristics to which the QCL type corresponds, and the subset of channel characteristics determined based on the value of the parameter is the subset of the plurality of channel characteristics to which the QCL type corresponds.

In yet other examples, the at least one parameter comprises a parameter, and the value of the parameter indicates to the terminal device whether the source reference signal is transmitted by a single TRP or by multiple TRPs in the serving cell.

In the examples described herein, the source reference signal may be a reference signal that is broadcast for initial access, and the target reference signal may be a reference signal for tracking a channel in time and frequency domain while the terminal is in active communication within the serving cell. For instance, the source reference signal may be a synchronisation signal block, SSB, and the target reference signal may be a channel state information reference signal, CSI-RS, such as a tracking reference signal.

The QCL information may comprise a transmission configuration indicator, TCI, state, and the target reference signal may be indicated as being quasi colocated with the source reference signal by identifying the TCI state.

In a sixth aspect, this specification describes apparatus (e.g. a network node or a component of a network node) comprising at least one processor and at least one memory storing instructions that, when executed by the at least one processor, cause the apparatus to perform at least: operating a cell serving a terminal device; transmitting to the terminal device quasi-colocation, QCL, information which identifies a source reference signal and one or more channel characteristics associated with the source reference signal; transmitting the source reference signal; transmitting, to the terminal device, at least one parameter, the value of which is set in dependence on whether the source reference signal is transmitted by a single transmit-receive point, TRP, or by multiple TRPs in the serving cell; and transmitting a target reference signal that is indicated as being quasi colocated with the source reference signal.

The value of the at least one parameter may be for use by the terminal device in determining a subset of the one or more channel characteristics identified in the QCL information that can be used by the terminal device for receiving the target reference signal.

At least one of the QCL information, configuration information for the source reference signal, or configuration information for the target reference signal may comprise the at least one parameter.

In some examples, the at least one parameter comprises a parameter, and the value of the parameter may indicate to the terminal device whether the source reference signal is transmitted by a single TRP or by multiple TRPs in the serving cell.

In other examples, the at least one parameter comprises a parameter, the value of the parameter indicating to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell. In such examples, the configuration information for the target reference signal may comprise the parameter.

In other examples, the at least one parameter comprises a parameter, and the QCL information indicates a QCL type that corresponds to a plurality of channel characteristics associated with the source reference signal. The configuration information for the source reference signal or the configuration information for the target reference signal comprises the parameter, and the value of the parameter indicates a QCL subtype that corresponds to a subset of the plurality of channel characteristics to which the QCL type corresponds.

In a seventh aspect, this specification describes a non-transitory computer readable medium comprising program instructions stored thereon for causing performance of any of the operations described with reference to any of the first to sixth aspects.

### Brief Description of the Figs.

For better understanding of the present application, reference will now be made by way of example to the accompanying drawings in which:
FIG. 1 is a schematic diagram illustrating the concept of quasi-colocation, QCL;
FIGs. 2A and 2B are schematics illustrations of two different transmission modes that may be employed by modern and future telecommunications networks;
FIG. 3 is message flow diagram illustrating various messages that may be transmitted, and operations that may be performed, in accordance with various examples described herein.
Figs. 4 and 5 are flowcharts illustrating various operations which may be performed by a terminal device and a network node, respectively, in accordance with various examples described herein;
Fig. 6 is a schematic illustration of an example configuration of a terminal device which may be configured to perform various operations described with reference to Figs. 1 to 5;
Fig. 7 is a schematic illustration of an example configuration of a network node which may be configured to perform various operations described with reference to Figs. 1 to 5; and
Fig. 8 is an illustration of a computer-readable medium upon which computer readable code may be stored.

### Detailed Description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings below, like reference numerals refer to like elements throughout.

This specification relates to quasi co-location (QCL) source determination in mTRP scenarios in a wireless communication network. According to R1-1700771 (Ericsson: "On spatial QCL definition"), QCL is defined as follows:
"Two antenna ports are said to be quasi co-located if properties of the channel over which a symbol on one antenna port is conveyed can be inferred from the channel over which a symbol on the other antenna port is conveyed".

Simply put, while the antenna port defines the correlation between symbols within a same antenna port because of the specific channel model used, QCL defines the correlation between symbols from different antenna ports because of the similar channel conditions experienced.

Thus, quasi co-location is a natural way to describe the relation between two different signals. When a signal (A) is said to be "quasi co-located" (QCLed) with another signal (B), this means that the two signals (A) and (B) have experienced very similar channel conditions. As will be appreciated, in order for them to have experienced such similar channel conditions, it is most likely that they are from the same location and from the same antenna and/or antenna configuration (e.g., using the same precoding weights). More specifically, quasi co-location between the two signals (A) and (B) may imply that they are transmitted from the same transmit and receive point TRP which applies the same Spatial Filter (beam) for both signals (A) and (B) and, accordingly, that the receiver (e.g. user equipment, UE) can use the same receive spatial filter to receive both signals (A) and (B). In addition, since the two signals reach the receiver through a similar channel, if the receiver can detect one of the signals and determine the channel properties of the signal, it will greatly help the receiver in detecting and receiving the other signal.

For instance, when the physical downlink control channel (PDCCH) signal from a gNB is QCLed with a tracking reference signal (TRS), it means that the PDCCH signal will experience similar channel conditions as the TRS. As such, the channel information estimated from TRS may be used when detecting the PDCCH signal. For instance, a UE may perform filter and channel parameter estimation based on the TRS and apply the estimated filter parameters when performing PDCCH signal detection and demodulation.

The Third Generation Partnership Project of mobile telecommunication standard development organisations (3GPP) defines several characteristics (or properties) to define the downlink channel condition as listed below:
- Doppler Shift
- Doppler Spread
- Average Delay
- Delay Spread
- Spatial Rx Parameter

Doppler shift is a change in the frequency of a radio signal due to the relative motion of the receiver. For example, if a gNB transmits a radio signal of frequency "X" and the receiver (UE) is moving away from, or closer towards, the gNB, the same radio signal will have a different frequency "Y" by the time it reaches the UE. Doppler spread, also known as the fading rate, is the difference between the signal frequency at the transmitter and receiver with respect to time. Average delay is the average time taken for a signal transmitted from one or multiple antennas to reach the receiver. Delay spread is the difference between the time of arrival of the earliest significant multipath component, typically the line of sight (LOS) component, and the time of arrival of the last multipath component. Spatial receiver (Rx) parameters refer to the beamforming properties of the downlink received signal, such as the dominant angle of arrival or average angle of arrival at the UE.

Predefined groups of these characteristics, which are shared by two QCLed signals, can be indicated to the receiver via one or more QCL-Types. 3GPP TS 38.214 version 16.2.0 Release 16 defines four different types of QCL, which are as follows:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

The different QCL-Types may be relevant for different applications. For instance, QCL-Types A and B may be relevant for determining channel state information (CSI), QCL-Type C may be relevant for deriving time and/or frequency synchronization information for reception of the target reference signal, and for determining channel measurements such as reference signal received power (RSRP), and QCL-Type D may be relevant to support beamforming. The relationship between two related signals can be indicated using one or more of the QCL-Types. For instance, and as an example only, two signals may be related via QCL-Type C and D.

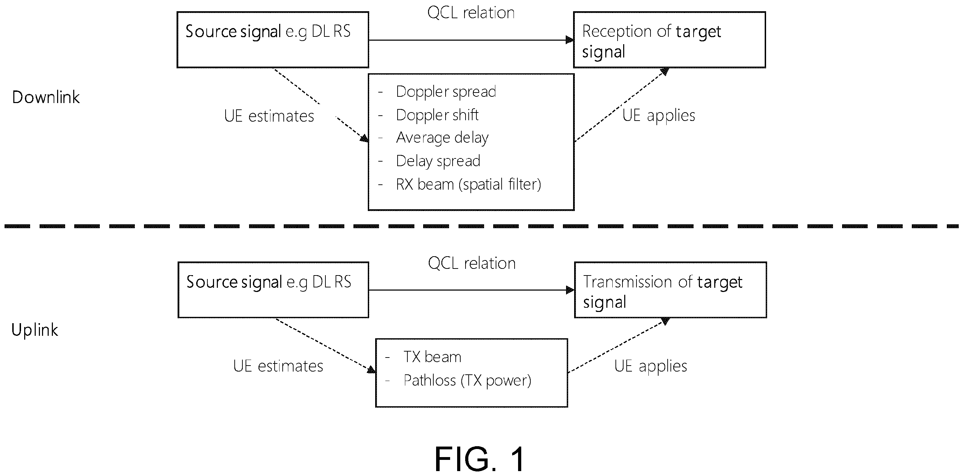

FIG. 1 is a schematic which illustrates how QCL might be utilised in the uplink and downlink directions. In both cases, there is source signal and a target reference signal. The source signal may typically be a downlink reference signal. The network transmits the source signal which is received by a terminal device (UE). Based on the received source signal, the UE estimates a number of channel characteristics. One or more of these estimated characteristics can then be used or applied when the UE receives the target reference signal. Which of the estimated channel characteristics are used depends on the "QCL relation" between the source and target reference signals. The QCL relation between the two signals may be indicated to the UE by the network via QCL information. For instance, the QCL information may indicate one or more of the QCL-Types discussed above. As such, the estimated channel characteristics that are applied by the UE when receiving the target reference signal are dependent on the QCL information that is indicated by the network. For instance, if the QCL relation is indicated to be QCL-Type A, the UE may apply each of the estimated Doppler shift, Doppler spread, average delay, delay spread when receiving the target reference signal. On the other hand, if the QCL relation is indicated to be QCL-Type C, the UE may apply each of the estimated Doppler shift and the average delay when receiving the target reference signal. The other channel characteristics that are not indicated by the QCL information may not be applied by the UE. In addition, in some examples, the other channel characteristics that are not indicated by the QCL information may not be estimated by the UE.

As can be seen in the FIG. 1, in the downlink direction, the channel characteristics that might be applied include Doppler Shift, Doppler Spread, Average Delay, Delay Spread, and Spatial Rx Parameters. In the uplink direction, the UE may estimate the transmit beam that is employed by the TRP which sends the source signal, and also the path loss.

Within NR networks, an example of a source signal is the synchronisation signal block (SSB). An example of a target reference signal is the Tracking Reference Signal (TRS), which may be used for constant time and frequency synchronization tracking, time and frequency offset estimation, and doppler and time domain channel parameter estimation. However, as noted above, the TRS is also a source signal. For instance, the UE may use the estimated parameters and channel filters from the TRS to receive the PDCCH, the Physical Downlink Shared Channel (PDSCH) and other CSI-RS. In other words, the TRS is a QCL source signal for the PDCCH, PDSCH and other CSI-RS. Thus, the TRS is the main NR signal for time and frequency synchronization tracking, and a pre-requisite to receive downlink signals and channels.

The QCL source for the TRS is the synchronisation signal block (SSB). Specifically, as can be seen from the 3GPP TS 38.214, SSB is QCL-TypeC and QCL-TypeD source for the TRS:

| | |
|---|---|
| For a periodic CSI-RS resource in a *NZP-CSI-RS-ResourceSet* configured with higher layer parameter *trs-Info,* the UE shall expect that a TCI-State indicates one of the following quasi co-location type(s): | |
| | - 'QCL-TypeC' with an SS/PBCH block and, when applicable, 'QCL-TypeD' with the same SS/PBCH block, or |
| | - 'QCL-TypeC' with an SS/PBCH block and, when applicable,'QCL-TypeD' with a CSI-RS resource in an *NZP-CSI-RS-ResourceSet* configured with higher layer parameter *repetition.* |

The TRS being QCLed with the SSB via Type C and via Type D means that the TRS and the SSB went through the similar radio channel sharing the similar properties in terms of Average Delay and Doppler Shift, and that the UE can assume the same spatial receive filter to receive the TRS as used to receive the SSB.

5G NR has been enhanced with mTRP functionalities since the second Release, i.e. since Release 16. In addition, it is expected that 6G would have mTRP as the supported scenario from the first Release of 6G, since the mTRP scenario is required to provide capacity and coverage improvements compared to 5G NR. Put simply, mTRP enables network base stations (e.g. gNBs) to use more than one TRP to communicate with a given UE.

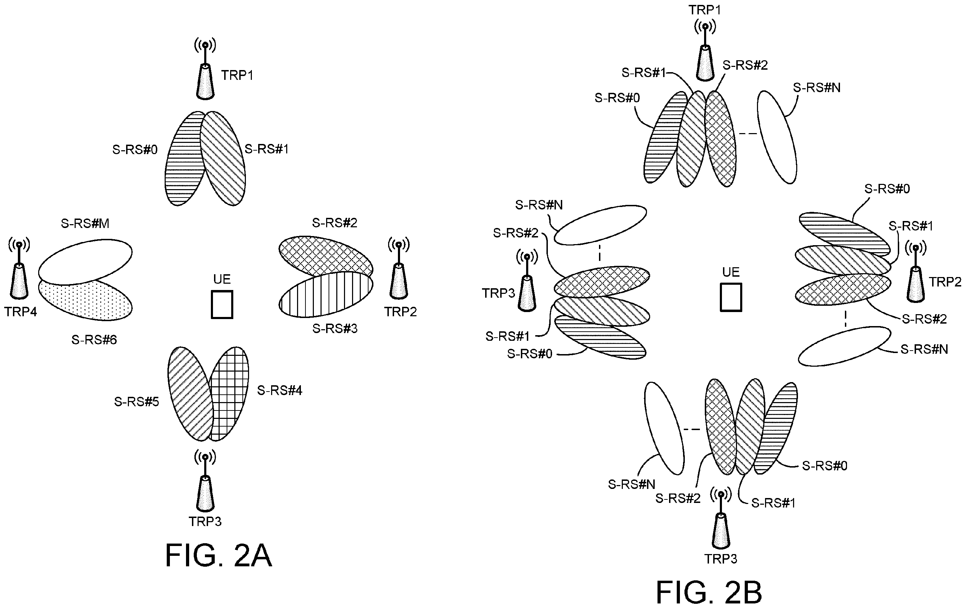

In mTRP scenario in 5G NR, a source signal, such as an SSB, can be transmitted as a single frequency network (SFN) transmission from multiple TRPs. That is, the same source signal can be transmitted simultaneously on the same time and frequency resources by multiple TRPs in a cell. Alternatively, source signals may be transmitted on a per TRP-basis. That is, each TRP in the cell transmits different source signal in a time and/or frequency-multiplexed manner. These two alternatives are illustrated in FIGs. 2A and 2B, in which FIG. 2B illustrates an example of an SFN transmission strategy across TRPs in a cell and FIG. 2A illustrates an example of a sequential (per-TRP) transmission strategy across TRPs in a cell. The two illustrated transmission strategies for transmitting reference signals may be referred to herein as transmission modes, and more specifically as the multiple TRP (or SFN) transmission mode and the single TRP transmission mode. As will be appreciated, the transmitted source signals depicted in FIGs 2A and 2B may all be of the same type, e.g. SSBs, but may have different identifiers or indexes, e.g. SSB#0 to SSB#N.

In the example of FIG. 2B, each of the source signals, S-RS#0 to S-RS#N, is physically transmitted by each of the multiple TRPs in the cell. The TRPs may cycle through the different source signals. For instance, at a first time all of the TRPs may transmit a first signal (e.g. S-RS#0) and then at a second time all of the TRPs may transmit a second signal (e.g. S-RS#1) and so on. In contrast, in FIG. 2A, each of the source signals S-RS#0 to S-RS#M is transmitted by a respective one (and only one) of the TRPs in the cell. For instance, S-RS#0 and S-RS#1 are transmitted by TRP1, and S-RS#2 and S-RS#3 are transmitted by TRP2. In the examples of FIGs. 2A and 2B, four TRPs TRP1-TRP4 are shown. However, it will be appreciated that fewer or more TRPs may be present. In addition, the numbers of source signals illustrated in each FIG. are examples only, and more or fewer source signals may be utilised.

Since the number of available source signals (e.g. SSBs) may be limited, the SFN transmission strategy of FIG. 2B may be chosen frequently, especially in cells with more than two or three TRPs, in which it may be the only viable choice. However, use of the SFN transmission strategy (as in FIG. 2B) may be problematic for the detection and reception of the target reference signal (e.g. TRS). This is because, the source signal (e.g. SSB) transmitted in the SFN manner does not actually share the same channel characteristics as a target reference signal (e.g. TRS), which is transmitted on a per TRP-basis and for which the source signal may be indicated to be a QCL source. As such, the UE preparing the channel estimation filters based on the source signal reception may complicate UE channel estimation of the target reference signal. This may be particularly problematic in cases such the SSB/TRS scenario in which the target reference signal, i.e. the TRS, is also a QCL source reference signal for other signals, such as the PDCCH, PDSCH and other CSI-RS, since it may adversely affect the ability of the terminal device UE to receive those other signals.

Whilst much of the discussion herein is framed in terms of the SSB and TRS, it will be appreciated that similar issues may occur when any QCL source reference signal is transmitted via a mTRP transmission strategy and the target reference signal for which the source reference signal is the QCL source is transmitted on a per TRP basis.

This specification proposes various example mechanisms for facilitating reception of signals in mTRP scenarios. As described herein, a terminal device or UE may be provided with at least one parameter, the value of which is dependent on whether a source reference signal is transmitted by a single TRP or by multiple TRPs in a serving cell of the terminal device. The terminal device may then determine, based on the value of the at least one parameter, a subset of one or more channel characteristics identified by QCL information. The terminal device may then use estimated values of the subset of channel characteristics when receiving a target reference signal for which the source signal is the QCL source. As will be appreciated from the discussion herein, a "subset" may include all elements of a set, or some but not all elements of the set (i.e. a proper subset).

As will be explained below, in some examples, when the value of the at least one parameter corresponds to the source reference signal being transmitted by multiple TRPs in the serving cell and the target reference signal is transmitted using a single TRP, e.g. by default or by network configuration, a proper subset of the channel characteristics identified by the QCL information (e.g. by a given QCL-Type) may be utilised when receiving the target reference signal. In contrast, in some examples, when the value of the at least one parameter corresponds to the source reference signal being transmitted by a single TRP and the target reference signal is also transmitted using the single TRP, a whole set of the channel characteristics identified by QCL information (e.g. by a given QCL-Type) may be utilised when receiving the target reference signal. For example, the one or more channel characteristics identified by the QCL information may include average delay and Doppler shift (e.g. as in QCL-TypeC), but when i) the value of the at least one parameter corresponds to the source reference signal being transmitted by multiple TRPs in the serving cell and ii) the target reference signal is transmitted using a single TRP in the serving cell, the subset of the channel characteristics may include the average delay but not the Doppler shift. This is because the average delay may be applicable even when the source reference signal is being transmitted via mTRP transmission (because the signal may be transmitted simultaneously by each of the TRPs). However, the Doppler shift may not be applicable, since the terminal device may be moving with a different velocity (i.e. direction and speed) relative to the different TRPs that are transmitting the reference signal. On the other hand, when i) the value of the at least one parameter corresponds to the source reference signal being transmitted by a single TRP in the serving cell and ii) the target reference signal is transmitted using a single TRP in the serving cell, the subset of channel characteristics may include both the average delay and the Doppler shift (i.e. the whole set of characteristics identified by QCL-TypeC).

The one or more channel characteristics identified by the QCL information may further include spatial receiver parameters, and when i) the value of the at least one parameter corresponds to the source reference signal being transmitted by a single TRP in the serving cell and ii) the target reference signal is transmitted using a single TRP in the serving cell, the receive spatial parameters may be used in addition to the average delay and the Doppler shift. In contrast, when i) the value of the at least one parameter corresponds to the source reference signal being transmitted by multiple TRPs in the serving cell and ii) the target reference signal is transmitted using a single TRP in the serving cell, the subset of channel characteristics does not include the receive spatial parameters. As will be appreciated, use of the spatial receiver parameters may be dependent on whether or not the UE has multiple antennas/panels. This is because, if the UE does not have multiple panels/antennas, it does not need to estimate or apply spatial receiver parameters.

As will be appreciated by the skilled person, QCL information may in some scenarios identify more than one QCL-Types, for instance QCL-TypeC {Doppler shift, average delay} and QCL-TypeD {Spatial Rx parameter}. In such examples, the set of channel characteristics from which the subset is determined may be the set identified by one of the QCL-Types (e.g. TypeC) or may be the set of channel characteristics identified by multiple QCL-Types (e.g. TypeC and TypeD). For instance, when the UE is not capable of beamforming (and so QCL-TypeD is not applicable), the set of channel characteristics from which the subset is determined may be the set identified by one of the QCL-Types (e.g. QCL-TypeC). However, when the UE is capable of beamforming, the set of channel characteristics from which the subset is determined may be the channel characteristics identified by both QCL-TypeC and QCL-TypeD.

Any suitable configuration information that is sent to the terminal device may comprise the at least one parameter. For instance, it may be included in at least one of a) the QCL information, which identifies i) the source reference signal and ii) the one or more channel characteristics that are associated with the source reference signal and that can be used for receiving one or more target reference signals, b) configuration information for the source reference signal, or c) configuration information for the target reference signal.

The at least one parameter may take any suitable form. For instance, the at least one parameter may be a parameter, the value of which, e.g. directly, indicates to the terminal device whether the source reference signal is transmitted by a single TRP or by multiple TRPs in the serving cell. For example, a value such as "1" or "true" may indicate that the source reference signal is transmitted by multiple TRPs in the serving cell, and a value such as "0" or "false" may indicate that the source reference signal is not transmitted by multiple TRPs in the serving cell and is instead transmitted by a single TRP in the serving cell. Of course, it will be appreciated that a value such as "1" or "true" may indicate that the source reference signal is transmitted by a single TRP in the serving cell, and a value such as "0" or "false" may indicate that the source reference signal is transmitted by multiple TRPs in the serving cell. The parameter may, in examples such as these, be referred to as, for example, an *'S-RS-mTRP-Info'* parameter, an *'S-RS-SFN-Info'* parameter or a *'S-RS-Txmode'* parameter.

In other examples, the at least one parameter may include a parameter, the value of which indicates to the terminal device whether or not a transmission mode, e.g., mTRP transmission or single TRP transmission, of the target reference signal is the same as a transmission mode of the source reference signal. In such examples, the configuration information for the target reference signal may comprise the parameter. A first value of the parameter may indicate that the transmission mode of the target reference signal is the same as a transmission mode of the source reference signal and a second value of the parameter may indicate that the transmission mode of the target reference signal is not the same as a transmission mode of the source reference signal. As will be appreciated, in scenarios in which the target reference signal is only ever transmitted in single TRP transmission mode, the parameter having the first value is indicative of the source reference signal also being transmitted using a single TRP mode. In contrast, the parameter having the second value is indicative of the source reference signal being transmitted using an mTRP transmission mode. In other example implementations, the target reference signal may be transmitted using the single TRP transmission mode or the mTRP transmission mode, for instance as selected by the network. In those implementations, in which the value of the parameter indicates whether the same transmission mode is being used by both the source and the target, the at least one parameter may include a second parameter which enables the terminal device to determine whether an mTRP transmission mode is being used for either the source or the target. For instance, a value of the second parameter may indicate whether the source reference signal is transmitted by a single TRP or by multiple TRPs in the serving cell. In such examples, at least one of the QCL information or the configuration information for the source reference signal may comprise the second parameter. Alternatively, the value of the second parameter may indicate whether the target reference signal is transmitted by a single TRP or by multiple TRPs in the serving cell. In such examples, the configuration information for the target reference signal may comprise the second parameter.

As will be appreciated, in examples in which the value of the at least one parameter indicates to the terminal device whether or not the transmission mode of the target reference signal is the same as a transmission mode of the source reference signal, if the parameter (and the second parameter, where appropriate) corresponds to the source reference signal being transmitted via mTRP transmission and the target reference signal being transmitted via single TRP transmission, a different subset of channel characteristics may be applied when receiving the target reference signal than if the parameter (and the second parameter, where appropriate) corresponds to the source reference signal and the target reference signal being transmitted via single TRP transmission. For example, when both signals are being transmitted using a single TRP transmission mode, all the channel characteristics indicated by the QCL information (or a given QCL-Type in the QCL information) may be utilised, whereas, when the source signal is being transmitted using an mTRP transmission mode and the target reference signal is not, some but not all (i.e. a proper subset) of the channel characteristics indicated by the QCL information (or a given QCL-Type in the QCL information) may be utilised. In examples in which the parameter (and the second parameter, where appropriate) corresponds to both the source reference signal and the target reference signal being transmitted via an mTRP transmission mode, the terminal device may use all of the channel characteristics indicated by the QCL information (or a given QCL-Type in the QCL information).

In other examples, the value of the at least one parameter may indicate the subset of the one or more channel characteristics identified in the QCL information that can be used for receiving the target reference signal. In these examples, the at least one parameter may be a parameter that is included in the configuration information for the source reference signal or the configuration information for the target reference signal.

As an example of the value of the at least one parameter indicating the subset of the one or more channel characteristics identified in the QCL information, the at least one parameter may include a parameter, the value of which may indicate a QCL-subtype that corresponds to a subset of the plurality of channel characteristics to which a QCL-Type included in the QCL information corresponds. The subset of channel characteristics used by the UE for receiving the target reference signal may be the subset to which the QCL subtype corresponds. For instance, if the QCL information indicates QCL-TypeC, the parameter may indicate a QCL-subtype C.b. So, whereas the QCL-Type C indicates Doppler shift and average delay, QCL-subtype C.b may correspond to only average delay. In such examples, a QCL-subtype may be indicated if the source reference signal is transmitted using the mTRP mode, and the terminal device may utilise only the subset of parameters to which the subtype corresponds (and not all the characteristics indicated by the QCL-Type).

As another example of the value of the at least one parameter indicating the subset of the one or more channel characteristics identified in the QCL information, the at least one parameter may include a parameter, the value of which indicates a bitmap or a mask to be applied to the characteristics indicated in the QCL-type in order to determine the subset. The bitmap or mask may be, e.g., a vector of values where a first value (e.g.,"0") at a given position in the bitmap or mask indicates that the channel characteristic in the QCL-type at a position corresponding to the given position should not be used by the terminal device, whereas a second value (e.g.,"1") indicates that the channel characteristic in the QCL-type at the position corresponding to the given position should be used by the terminal device. For instance, if the QCL-Type was QCL-TypeA (i.e. {Doppler shift, Doppler spread, average delay, delay spread}), a bitmap or mask of {0010} may indicate that only the average delay should be used. Likewise, if the QCL-Type was QCL-TypeC (i.e. {Doppler shift, average delay), a bitmap or mask of {01} may indicate that only the average delay should be used.

As will be appreciated from the examples described herein, the source reference signal may, in some implementations, be a reference signal that is broadcast for initial access. In 5G, the SSB is used for this purpose. This may also be the case in future generations, such as 6G, but it is also possible that a different reference signal may instead be used for this purpose. The target reference signal may, in some implementations, be a reference signal for tracking a channel in time and frequency domain while the terminal is in active communication within the serving cell. In 5G, such a signal is referred to as the TRS (tracking reference signal), but it will be appreciated that a different (or at least differently named) signal may be utilised for this purpose in future networks.

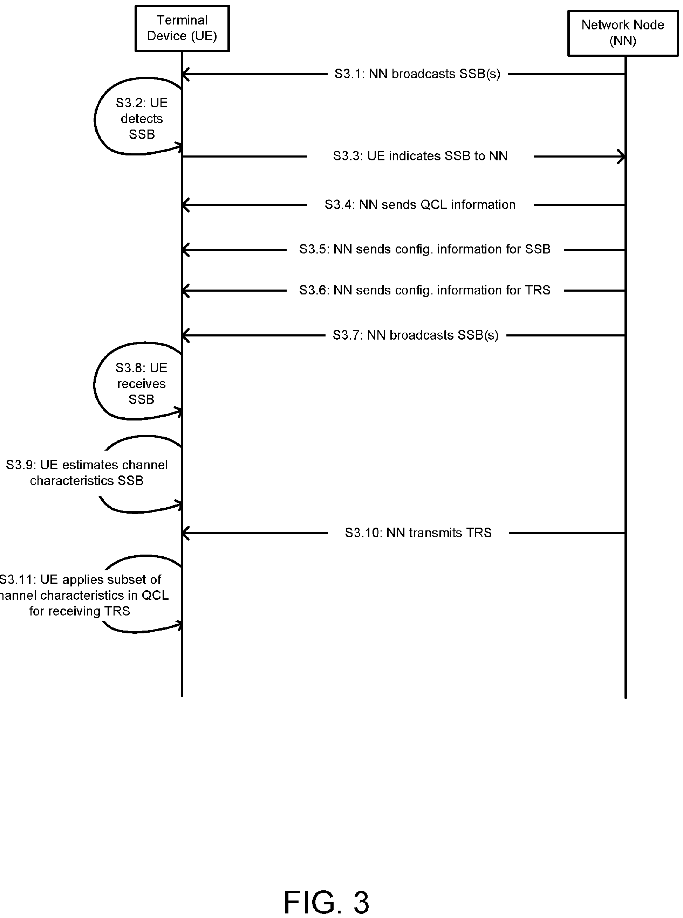

FIG. 3 is a message flow illustrating various messages that may be transmitted and operations that may be performed in accordance with various implementations of the technology described herein. Figure 3 illustrates the specific implementation in which the source signal is the SSB and the target reference signal is the TRS. It will, however, be appreciated that the techniques described herein may be applied to other source and target reference signal combinations. Accordingly, it is not intended that the operations and messages discussed with reference to FIG. 3 are limited to the specific examples in which the source signal is the SSB and the target reference signal is the TRS. Instead, the skilled person will appreciate that the operations and messages may equally apply to other signal types.

The message flow is illustrated with respect to a terminal device and a network node, such as a gNB or, more generally, a base station. Although it is not illustrated in Figure 1, it will be appreciated that the network node may utilise more than one TRP to transmit signals. In addition, it will be appreciated that the network node may be distributed over more than one network/virtual entities (e.g. centralized units, CU, distributed units, DU, and remote radio heads, RRH) which host different network functions or protocol layers.

In operation S3.1, the network node transmits a source reference signal. More specifically, in this example, the network node broadcasts an SSB, which is an example of a reference signal that is used by the terminal device for initial access or handover. As will be appreciated, the network node may be transmitting multiple source reference signals and/or may be transmitting (one or multiple) source reference signals via an mTRP transmission mode or a single-TRP transmission mode.

In operation S3.2, the terminal device detects the source signal (i.e. an SSB, in this example).

In operation S3.3, the terminal device sends an indication of the source signal to network node. When the source signal is an SSB, the sending of the indication of the SSB to the network node may be part of the initial access procedure or after initial access, e.g. via Layer 1 reference signal receive power (RSRP) reporting.

In operation S3.4, the network node sends QCL information to the terminal device. This may be performed in response to receiving, or otherwise having received, the indication of the SSB from the terminal device. The QCL information identifies the source reference signal, which in this example is the SSB indicated by the terminal device in S3.3. The QCL information also indicates one or more channel characteristics that are associated with the source reference signal and can be used for receiving one or more target reference signals for which the source signal is the QCL source. The QCL information may be a transmission configuration indicator, TCI, state. TCI states identify a source signal, in this case the SSB. In addition, the TCI state identifies one or more QCL-Types which indicate the one or more channel characteristics that can be used for receiving the target reference signals for which the source signal is the QCL source. In addition, the TCI state may include the identity of the relevant cell and the Bandwidth Part. The TCI state for the indicated SSB may be provided to the terminal device, as part of RRC signalling, along with a number of other TCI states for other reference signals.

In some examples, in operation S3.5, the network node may send to the terminal device configuration information for the source reference signal. In other examples, however, no configuration information for the source reference signal may be sent. For instance, before the terminal device has transitioned to an RRC connected state, the terminal device may not receive any configuration information for a source signal such as the SSB. In other examples, before the terminal device has transitioned to an RRC connected state, the terminal device may receive configuration information for a source signal, such as the SSB, through System Information Block (SIB), for instance through SIB1. In other examples such as when the terminal device transitions to, or is already in, a RRC connected state, some configuration information for the source reference signal (either an SSB or another source signal) may be sent to the terminal device.

In operation S3.6, the network node sends to the terminal device configuration information for the target reference signal. The configuration information for the target reference signal may identify the source signal. Based on this identification, the terminal device is able to refer to the QCL information for the source signal, as received in S3.4, to identify the channel characteristics that are associated with the source reference signal and can be used for receiving the target reference signal. In some examples, the configuration information for the target reference signal indicates a TCI state, which serves to identify the source reference signal (in this example, the SSB). In a 5G context (and potentially in future generations), the configuration information for the TRS may be made up of the *'NZP-CSI-RS-ResourceSet'* parameter structure (with the *'TRS-info'* parameter set to "true") and one or more *'NZP-CSI-RS-Resource'* parameter structure, one for each *NZP-CSI-RS-Resource* identified in the *'NZP-CSI-RS-ResourceSet'.* Here, a parameter identifying the *'TCI-StateId'* is included in each *'NZP-CSI-RS-Resource'* parameter structure. In some examples, the configuration information for the target reference signal may not indicate the source reference signal. For instance, the source reference signal for a particular target signal, such as PDCCH, PDSCH, PUCCH or PUSCH, may be configured or indicated in some other manner. For instance, the source reference signal may be indicated through a combination of e.g. MAC and DCI in the unified TCI framework. For instance, a MAC CE command may be used to select up to 8 activated TCI states among the RRC-configured TCI states, and DCI may be used to indicate one of the activated TCI states.

As discussed above, the network node provides at least one parameter, the value of which is dependent on whether the source reference signal is transmitted by a single transmit-receive point, TRP, or by multiple TRPs in a serving cell of the terminal device. At least one of the QCL information, configuration information for the source reference signal (e.g. SIB1), or the configuration information for the target reference signal may comprise the at least one parameter. The form of the at least one parameter and the information specifically indicated by the at least one parameter may be as described anywhere herein, not least before the discussion of Figure 3. However, it will be appreciated that the at least one parameter is not limited to the specific examples described herein. Instead, the at least one parameter may take any suitable form that can allow the terminal device to determine, based on the value of the at least one parameter, a subset of the one or more channel characteristics identified in the QCL information to use for receiving the target reference signal.

In operation S3.7, the network node broadcasts the source reference signal. As will be appreciated, this may be transmitted by a single TRP or in an SFN manner by multiple TRPs.

In operation S3.8, the terminal device receives the source reference signal. In some examples in which configuration information for the source reference signal is received by the terminal device, this may be used to receive the source reference signal.

In operation S3.9, the terminal device estimates the channel characteristics associated with the received source signal. These may include all of the Doppler shift, the Doppler spread, the average delay, the delay spread and, if the terminal device has multiple antennas, the spatial Rx parameter. However, in other examples, the terminal device may estimate only a selection of the characteristics. For instance, the terminal device may estimate only those characteristics indicated in the QCL information (e.g. via one or more QCL-Types) or only a subset of the characteristics indicated in the QCL information, the subset being determined based on the value of the at least one parameter that is dependent on whether the source reference signal is transmitted by a single TRP or by multiple TRPs. Also, the terminal device may estimate the channel characteristics associated with the received source signal after step S3.2.

In operation S3.10, the network node transmits the target reference signal. In the illustrated example, the target reference signal is the tracking reference signal (TRS).

In operation S3.11, the terminal device uses the estimated values of a subset of the channel characteristics indicated by the network in the QCL information (e.g. via a QCL-Type) for receiving the target reference signal. As explained above, the subset is determined based on the value of the at least one parameter that is dependent on whether the source reference signal is transmitted by a single TRP or by multiple TRPs in a serving cell of the terminal device. For example, and as explained above, when the value of the at least one parameter corresponds to the source reference signal being transmitted by single TRP and the QCL relation indicated by the QCL information is QCL-TypeC and QCL-TypeD, the terminal device may apply both the average delay and the Doppler Shift estimated from the source reference signal for receiving the target reference signal. In addition, if the terminal device has multiple antennas/panels, the terminal device may additionally utilise the estimated Rx spatial parameter for receiving the target reference signal. In contrast, when the value of the at least one parameter corresponds to the SSB being transmitted by multiple TRPs, the terminal device may apply the average delay, but not the Doppler shift (nor the Rx Spatial Parameters).

As will be appreciated from the above discussion, the techniques described herein may facilitate the terminal device's reception of target reference signals, in scenarios in which the source reference signals may be transmitted in a mTRP manner. They may be particularly beneficial when the target reference signal is itself a source signal.

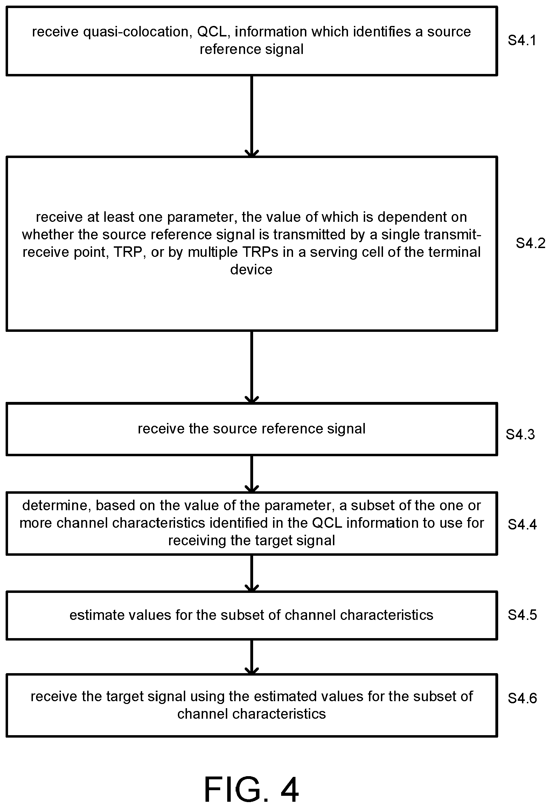

FIG. 4 is a flow diagram illustrating various operations that may be performed by a terminal device, such as the terminal device described with reference to FIG. 3. As will be appreciated, many of the operations described with reference to FIG. 4 correspond in some respects to those described with reference to FIG. 3.

In operation S4.1, the terminal device receives, from a network node such as a gNB or base station, quasi-colocation, QCL, information which identifies a source reference signal and one or more channel characteristics associated with the source reference signal that can be used for receiving one or more target reference signals. The QCL information may be similar to that described with reference to S3.4. For instance, it may include one or more QCL-Types. In such examples, it may be in the form of a TCI State.

In operation S4.2, the terminal device receives least one parameter, the value of which is dependent on whether the source reference signal is transmitted by a single transmit-receive point, TRP, or by multiple TRPs in a serving cell of the terminal device.

At least one of the QCL information (see S4.1), the configuration information for the source reference signal (where such is received by the terminal device) or the configuration information for the target reference signal, which may also be received at the terminal device (but which is not depicted in FIG. 4), may comprise the at least one parameter. As will be appreciated, in examples or implementations in which the configuration information for the source reference signal is not received by the terminal device, at least one of the QCL information or the configuration information for the target reference signal may comprise the at least one parameter.

The configuration information for the source reference signal (where such is received) may be as described with reference to S3.5. As discussed above, in some examples, the terminal device may not receive any configuration information for the source reference signal. The configuration information for the target reference signal may be as described with reference to S3.6. In some examples, the configuration information for the target reference signal may indicate the source reference signal with which the target reference signal is quasi-colocated. However, as discussed above, in other examples the source reference signal with which the target reference signal is quasi-colocated may be indicated or configured in some other manner.

In operation S4.3, the terminal device receives, from the network node, the source reference signal. In some examples in which the configuration information for the source reference signal is received by the terminal device, the configuration information for the source reference signal may be used to receive the source reference signal.

In operation S4.4, the terminal device determines, based on the value of the at least one parameter, a subset of the one or more channel characteristics identified in the QCL information to use for receiving the target reference signal.

In operation S4.5, the terminal device estimates values for the subset of the one or more channel characteristics identified in the QCL information based on the received source signal. In some examples, the terminal device may estimate values of only the subset of channel characteristics. In other examples, the terminal device may estimate values of only those channel characteristics indicated in the QCL information. Alternatively, the terminal device may estimate values for all channel characteristics regardless of the QCL information (or the subset).

In operation S4.6, the terminal device receives, from the network node, the target reference signal using the estimated values for the subset of channel characteristics.

As will of course be appreciated, operations S4.3, S4.4, S4.5 and S4.6 may be similar to as described with reference to operations S3.8 to S3.11.

In some examples, operations S4.4 and S4.5 may be performed in a different order to that depicted. For instance, the subset of channel characteristics may be determined after the values of the channel characteristics have been estimated. In such examples, the terminal device may estimate values of only those channel characteristics indicated in the QCL information or values for all channel characteristics regardless of the QCL information. Similarly, in addition or alternatively, operation S4.4 may, in some examples, be performed before operation S4.3.

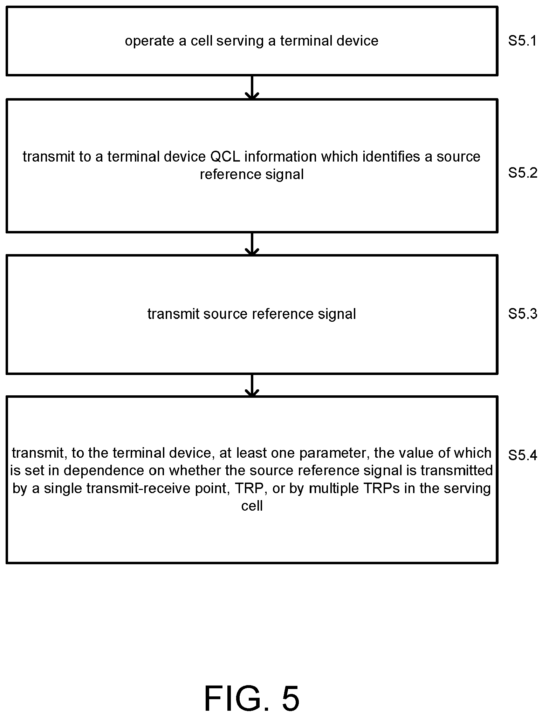

FIG. 5 is a flow diagram illustrating various operations that may be performed by a network node, such as the network node described with reference to FIGs. 3 and 4. As will be appreciated, many of the operations described with reference to FIG. 5 may correspond to those described with reference to FIG. 3.

In operation S5.1, the network node operates a cell serving a terminal device.

In operation S5.2, the network node transmits to the terminal device QCL information which identifies a source reference signal and one or more channel characteristics associated with the source reference signal that can be used by the terminal device for receiving one or more target reference signals. The QCL information may be as described elsewhere herein, for instance with reference to FIGs. 3 and 4. Operation S5.2 may be similar to operation S3.4.

In operation S5.3, the network node transmits the source reference signal. This may be performed repeatedly, for instance, periodically. Thus, as will be appreciated, the source reference signal may be transmitted multiple times throughout the method, for instance prior to S5.1 and/or after S5.4.

In operation S5.4, the network node transmits, to the terminal device, at least one parameter, the value of which is set in dependence on whether the source reference signal is transmitted by a single transmit-receive point, TRP, or by multiple TRPs in the serving cell. This may be as described with reference to operation S4.2. As such, at least one of the QCL information (see S5.2), the configuration information for the source reference signal (where such is transmitted by the network node) or the configuration information for the target reference signal, which may also be transmitted by the network node (but which is not depicted in FIG. 5), may comprise the at least one parameter. As will be appreciated, in examples or implementations in which the configuration information for the source reference signal is not transmitted by the network node, at least one of the QCL information or the configuration information for the target reference signal may comprise the at least one parameter.

As described herein, the value of the at least one parameter is for use by the terminal device in determining a subset of the one or more channel characteristics identified in the QCL information that can be used by the terminal device for receiving the target reference signal. The at least one parameter may be as described hereinbefore with reference to the preceding FIGs.

As will of course be appreciated, the network node described in connection with FIGs. 4 and 5 may utilise more than one TRP to transmit signals. In addition, as mentioned above, the network node may be distributed over more than one network/virtual entities (e.g. centralized units, CU, distributed units, DU, remote radio heads, RRH) which host different network functions or protocol layers. As will also be appreciated, some of the operations described with reference to FIGs. 3, 4 and 5 may be performed in different orders to those depicted. In addition or alternatively, some of the operations may be performed simultaneously. For example, where the QCL information comprises the at least one parameter, operations S5.2 and S5.4 may, in fact, be a single operation (as may be operations S4.1 and S4.2).

### Example Configurations of Apparatuses

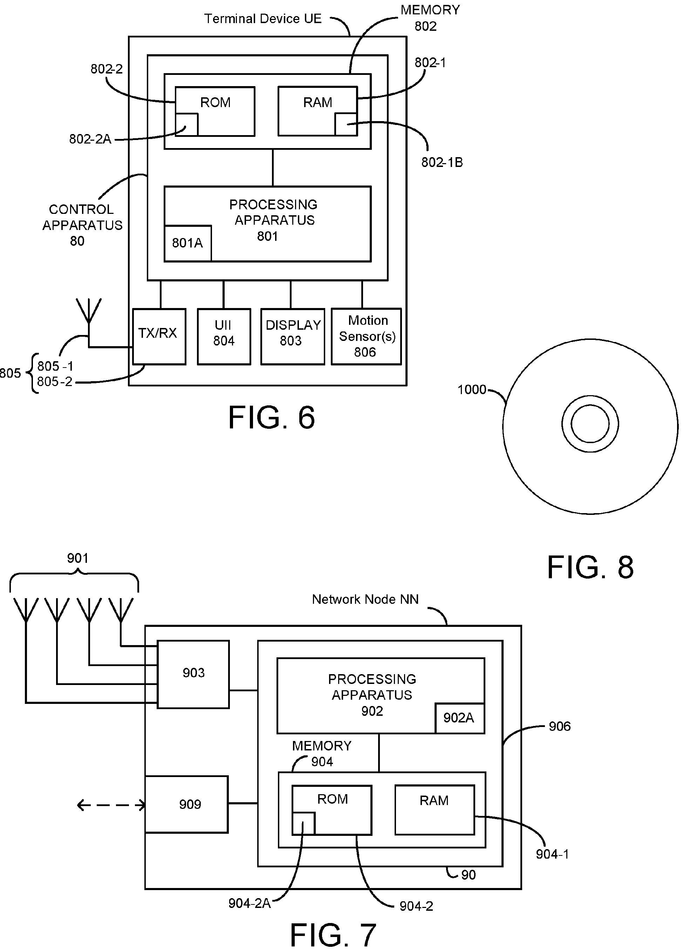

FIG. 6 is a schematic illustration of an example configuration of a terminal device UE which may be configured to perform various operations described with reference to FIGS. 1 to 5.

The terminal device UE may communicate, e.g. with a network node or base station, via an appropriate radio interface arrangement 805. The interface arrangement 805 may be provided for example by means of a radio part 805-2 (e.g. a transceiver) and an associated antenna arrangement 805-1. The antenna arrangement 805-1 may be arranged internally or externally to the terminal device UE. In order to be able to utilise beam forming, the antenna arrangement 805-1 includes multiple antennas. For instance, some UE's may include twelve antenna elements, e.g. four panels each having four cross-polarized antenna elements.

The terminal device UE comprises a controller/control (or processing) apparatus 80 which is operable to control the other components of the terminal device UE in addition to performing any suitable combinations of the operations described in connection with terminal device UE with reference to the preceding FIGS. The control apparatus 80 may comprise processing apparatus 801 and memory 802. Computer-readable code 802-2A may be stored on the memory 802, which when executed by the processing apparatus 801, causes the control apparatus 80 to perform any of the operations described herein in relation to the terminal device UE.

Example configurations of the memory 802 and processing apparatus 801 will be discussed in more detail below.

The terminal device UE may be, for example, a device that does not need human interaction, such as an entity that is involved in Machine Type Communications (MTC). Alternatively, the terminal device UE may be a device designed for tasks involving human interaction such as making and receiving phone calls between users and streaming multimedia or providing other digital content to a user. Non-limiting examples for the terminal device UE include a smart phone, a laptop, a smartwatch, a tablet computer, an e-reader, a vehicle-based terminal device, such as those mounted on cars, buses, uncrewed aerial vehicles (UAVs), aeroplanes, trains, or boats, or any type of terminal device that may be carried by a user, or worn on their person.

Where the terminal device UE is a device designed for human interaction, the user may control the operation of the terminal device UE by means of a suitable user input interface UII 804 such as keypad, voice commands, touch sensitive screen or pad, combinations thereof or the like. A display 803, a speaker and a microphone may also be provided. Furthermore, the terminal device UE may comprise appropriate connectors (either wired or wireless) to other devices and/or for connecting external accessories, for example hands-free equipment, thereto. The terminal device UE may additionally be associated with (e.g., comprises or is in short range wired or wireless communication with) one or a plurality of motion sensors 806 for sensing motion of the mobile device. The terminal device may additionally include other sensors such as a GNSS unit.

FIG. 7 is a schematic illustration of an example configuration of a network node NN. As described above, the network node may be a base station, such as a gNodeB or gNB. In some examples, the network node may include a wireless interface via which to communicate with terminal devices UEs. The network node may therefore also be TRP. In such examples, the network node may, as depicted in FIG. 7, comprise a radio frequency antenna array 901 configured to receive and transmit radio frequency signals. Although the network node NN is shown as having an array 901 of four antennas, this is illustrative only. The number of antennas may vary from two to many hundreds. The network node NN further comprises radio frequency interface circuitry 903 configured to interface between the antenna 901 and a control apparatus 90. The radio frequency interface circuitry 903 may also be known as a transceiver.

The network node NN also comprises one or more interfaces 909 via which it can communicate with TRPs, other base stations, and other network entities such as those of the core network.

The network node control apparatus 90 may be configured to cause the exchange of information with other network elements via the interface 909. In addition, the network node control apparatus 90 may be configured to process signals from the radio frequency interface circuitry 903, control the radio frequency interface circuitry 903 to generate suitable RF signals to communicate information to the terminal devices UEs via the wireless communications link.

The network node control apparatus 90 may comprise processing apparatus 902 and memory 904. Computer-readable code 904-2A may be stored on the memory 904, which when executed by the processing apparatus 902, causes the control apparatus 90 to perform any of the operations assigned to the base station TRP1 described above.

As discussed above, in some examples the network node may be distributed over more than one network/virtual entities (e.g. centralized units, CU, distributed units, DU, and remote radio heads, RRH) which host different network functions or protocol layers. In addition, as should of course be appreciated, the entities UE, NN shown in each of FIGS.6 and 7 described above may comprise further elements which are not directly involved with processes and operations in respect of which this application is focussed.

Some further details of components and features of the above-described apparatus/entities/apparatuses and alternatives for them will now be described.

The control apparatuses 80, 90 may comprise processing apparatus 801, 902 communicatively coupled with memory 802, 904. The memory 802, 904 has computer readable instructions 802-2A, 904-2A stored thereon, which when executed by the processing apparatus 801, 902 causes the control apparatus 80, 90 to cause performance of various ones of the operations described herein. The control apparatus 80, 90 may in some instances be referred to, in general terms, as "apparatus".

The processing apparatus 801, 902 may be of any suitable composition and may include one or more processors 801A, 902A of any suitable type or suitable combination of types. For example, the processing apparatus 801, 902 may be a programmable processor that interprets computer program instructions 802-2A, 904-2A and processes data. The processing apparatus 801, 902 may include plural programmable processors. Alternatively, the processing apparatus 801, 902 may be, for example, programmable hardware with embedded firmware. The processing apparatus 801, 902 may be termed processing means. The processing apparatus 801, 902 may alternatively or additionally include one or more Application Specific Integrated Circuits (ASICs). In some instances, processing apparatus 801, 902 may be referred to as computing apparatus.

The processing apparatus 801, 902 is coupled to the memory (which may be referred to as one or more storage devices) 802, 904 and is operable to read/write data to/from the memory 802, 904. The memory 802, 904 may comprise a single memory unit or a plurality of memory units, upon which the computer readable instructions (or code) 802-2A, 904-2A is stored. For example, the memory 802, 904 may comprise both volatile memory 802-1 and non-volatile memory 802-2. For example, the computer readable instructions/program code 802-2A, 904-2A may be stored in the non-volatile memory 802-2, 904-2 and may be executed by the processing apparatus 801, 902 using the volatile memory 802-1, 904-1 for temporary storage of data or data and instructions. In some examples, a transmission buffer 802-1B of the terminal device UE may be constituted by volatile memory 802-1 of the UE control apparatus 80. Examples of volatile memory include RAM, DRAM, and SDRAM etc. Examples of non-volatile memory include ROM, PROM, EEPROM, flash memory, optical storage, magnetic storage, etc. The memories in general may be referred to as non-transitory computer readable memory media.

The term 'memory', in addition to covering memory comprising both non-volatile memory and volatile memory, may also cover one or more volatile memories only, one or more non-volatile memories only, or one or more volatile memories and one or more non-volatile memories.

The computer readable instructions/program code 802-2A, 904-2A may be preprogrammed into the control apparatus 80, 90. Alternatively, the computer readable instructions 802-2A, 904-2A may arrive at the control apparatus 80, 90 via an electromagnetic carrier signal or may be copied from a physical entity 1000 such as a computer program product, a memory device or a record medium such as a CD-ROM or DVD an example of which is illustrated in Fig. 8. The computer readable instructions 802-2A, 904-2A may provide the logic and routines that enables the entities devices/apparatuses to perform the functionality described above. The combination of computer-readable instructions stored on memory (of any of the types described above) may be referred to as a computer program product.

Embodiments of the technology described herein may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing apparatus" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

If desired, the different functions discussed herein may be performed in a different order and/or concurrently with each other. Furthermore, if desired, one or more of the above-described functions may be optional or may be combined. Similarly, it will also be appreciated that flow diagrams described herein are examples only and that various operations depicted therein may be omitted, reordered and or combined. Although the methods and apparatuses have been described in connection with a New Radio (NR) network, it will be appreciated that they are not limited to such networks and are applicable to radio networks of various different types.

Although various aspects of the methods and apparatuses described herein are set out in the independent claims, other aspects may comprise other combinations of features from the described embodiments and/or the dependent claims with the features of the independent claims, and not solely the combinations explicitly set out in the claims.

It is also noted herein that while various examples are described above, these descriptions should not be viewed in a limiting sense. Rather, there are several variations and modifications which may be made without departing from the scope of the present invention as defined in the appended claims.

## Claims

1. A terminal device comprising:
means for receiving quasi-colocation, QCL, information which identifies a source reference signal and one or more channel characteristics associated with the source reference signal;
means for receiving at least one parameter, the value of which is dependent on whether the source reference signal is transmitted by a single transmit-receive point, TRP, or by multiple TRPs in a serving cell of the terminal device;
means for receiving the source reference signal;
means for determining, based on the value of the at least one parameter, a subset of the one or more channel characteristics identified by the QCL information to use for receiving a target reference signal that is indicated as being quasi colocated with the source reference signal;
means for estimating values for the subset of channel characteristics based on the received source reference signal; and
means for receiving the target reference signal using the estimated values for the subset of channel characteristics.

2. The terminal device of claim 1, wherein the one or more channel characteristics identified by the QCL information include average delay and Doppler shift,
and wherein:
if i) the value of the at least one parameter corresponds to the source reference signal being transmitted by multiple TRPs in the serving cell and ii) the target reference signal is transmitted using a single TRP in the serving cell, then the subset of channel characteristics includes the average delay and does not include the Doppler shift.

3. The terminal device of claim 2, wherein:
if i) the value of the at least one parameter corresponds to the source reference signal being transmitted by a single TRP in the serving cell and ii) the target reference signal is transmitted using a single TRP in the serving cell, then the subset of channel characteristics includes the average delay and the Doppler shift.

4. The terminal device of claim 1, wherein the one or more channel characteristics identified by the QCL information include average delay, Doppler shift and spatial receiver parameters,
and wherein:
if i) the value of the at least one parameter corresponds to the source reference signal being transmitted by multiple TRPs in the serving cell and ii) the target reference signal is transmitted using a single TRP in the serving cell, then the subset of channel characteristics includes the average delay and does not include the doppler shift and the spatial receive parameters.

5. The terminal device of claim 4, wherein:
if i) the value of the at least one parameter corresponds to the source reference signal being transmitted by a single TRP in the serving cell and ii) the target reference signal is transmitted using a single TRP in the serving cell, then the subset of channel characteristics includes the average delay, the Doppler shift and the spatial receiver parameters.

6. The terminal device of any preceding claim, wherein at least one of the QCL information, configuration information for the source reference signal, or configuration information for the target reference signal comprises the at least one parameter.

7. The terminal device of any preceding claim, wherein the at least one parameter comprises a parameter,
and wherein the value of the parameter indicates to the terminal device whether the source reference signal is transmitted by a single TRP or by multiple TRPs in the serving cell.

8. The terminal device of claim 6, wherein the at least one parameter comprises a parameter,
and wherein:
the value of the parameter indicates to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell, and
the configuration information for the target reference signal comprises the parameter.

9. The terminal device of claim 8, wherein the at least one parameter comprises a second parameter,
and wherein:
a value of the second parameter indicates whether the source reference signal is transmitted by a single TRP or by multiple TRPs in the serving cell, and
at least one of the QCL information, the configuration information for the source reference signal or the configuration information for the target reference signal comprises the second parameter.

10. The terminal device of claim 6, wherein the at least one parameter comprises a parameter,
and wherein:
the value of the parameter indicates the subset of the one or more channel characteristics identified in the QCL information that can be used for receiving the target reference signal, and
the configuration information for the source reference signal or the configuration information for the target reference signal comprises the parameter.

11. The terminal device of claim 10, wherein:
the QCL information indicates a QCL type that corresponds to a plurality of channel characteristics associated with the source reference signal,
the value of the parameter indicates a QCL subtype that corresponds to a subset of the plurality of channel characteristics to which the QCL type corresponds, and
the subset of channel characteristics determined based on the value of the parameter is the subset of the plurality of channel characteristics to which the QCL type corresponds.

12. The terminal device of claim 10, wherein:
the QCL information indicates a QCL type that corresponds to a plurality of channel characteristics associated with the source reference signal,
the value of the parameter represents a bitmap or a mask,
the terminal device comprises means for applying the bitmap or the mask to the plurality of channel characteristics to determine a subset of the plurality of channel characteristics to which the QCL type corresponds, and
the subset of channel characteristics determined based on the value of the parameter is the subset of the plurality of channel characteristics to which the QCL type corresponds.

13. The terminal device of any preceding claim, wherein:
the source reference signal is a reference signal that is broadcast for initial access, and
the target reference signal is a reference signal for tracking a channel in time and frequency domain while the terminal is in active communication within the serving cell.

14. The terminal device of any preceding claim, wherein the source reference signal is a synchronisation signal block, SSB, and the target reference signal is a channel state information reference signal, CSI-RS.

15. The terminal device of claim 14, wherein the target reference signal is a tracking reference signal.

16. The terminal device of any preceding claim, wherein the QCL information comprises a transmission configuration indicator, TCI, state, and the target reference signal is indicated as being quasi colocated with the source reference signal by identifying the TCI state.

17. A network node comprising:
means for operating a cell serving a terminal device;
means for transmitting to the terminal device quasi-colocation, QCL, information which identifies a source reference signal and one or more channel characteristics associated with the source reference signal;
means for transmitting the source reference signal;
means for transmitting, to the terminal device, at least one parameter, the value of which is set in dependence on whether the source reference signal is transmitted by a single transmit-receive point, TRP, or by multiple TRPs in the serving cell; and
means for transmitting a target reference signal that is indicated as being quasi colocated with the source reference signal.

18. The network node of claim 17, wherein the value of the at least one parameter is for use by the terminal device in determining a subset of the one or more channel characteristics identified in the QCL information that can be used by the terminal device for receiving the target reference signal.

19. The network node of claim 17 or 18, wherein at least one of the QCL information, configuration information for the source reference signal, or configuration information for the target reference signal comprises the at least one parameter.

20. The network node of any of claims 17 to 19, wherein the at least one parameter comprises a parameter,
and wherein the value of the parameter indicates to the terminal device whether the source reference signal is transmitted by a single TRP or by multiple TRPs in the serving cell.

21. The network node of claim 19, wherein the at least one parameter comprises a parameter,
and wherein the configuration information for the target reference signal comprises the parameter, and the value of the parameter indicates to the terminal device whether or not a transmission mode of the target reference signal is the same as a transmission mode of the source reference signal, wherein the transmission mode of the source reference signal is one of transmission of the source reference signal by a single TRP or transmission of the source reference signal by multiple TRPs in the serving cell.

22. The network node of claim 19, wherein the at least one parameter comprises a parameter,
and wherein:
the QCL information indicates a QCL type that corresponds to a plurality of channel characteristics associated with the source reference signal; and
the configuration information for the source reference signal or the configuration information for the target reference signal comprises the parameter, and
the value of the parameter indicates a QCL subtype that corresponds to a subset of the plurality of channel characteristics to which the QCL type corresponds.
